# FASCICULE DE BREVET EUROPEEN

(11) **EP 2 265 454 B1**
(45) Date de publication et mention de la délivrance du brevet: **29.08.2012**
(21) Numéro de dépôt: 09742309.9
(22) Date de dépôt: 10.04.2009
(51) Int. Cl.: B60J 10/04, B60J 10/08

(54) **GARNITURE D'ETANCHEITE AVEC COQUE POUR PORTIERE DE VEHICULE**
DICHTUNG MIT EINER HÜLLE FÜR EINE FAHRZEUGTÜR
SEALING WITH A COVERING FOR VEHICLE DOOR

(30) Priorité: 11.04.2008 FR 0852438
(43) Date de publication de la demande: 29.12.2010
(73) Titulaire: Cooper Standard France, 35000 Rennes (FR)
(72) Inventeur: STEFANELLI, Didier, F-35210 Saint Christophe des Bois (FR); GUIZOUARN, Vincent, F-35410 Domloup (FR)
(74) Mandataire: Barbin le Bourhis, Joël
(86) Numéro de dépôt international: PCT/FR2009/050660
(87) Numéro de publication internationale: WO 2009/136111

(56) Documents cités:
- EP-A- 0 443 345
- WO-A-00/73097
- WO-A-01/87658
- FR-A- 2 727 182
- GB-A- 2 369 849
- GB-A- 2 421 268
- US-A- 5 743 047

## Description

La présente invention concerne une garniture d'étanchéité de portière de véhicule destinée à être fixée sur une portière, voir par exemple le document EP-A-443345.

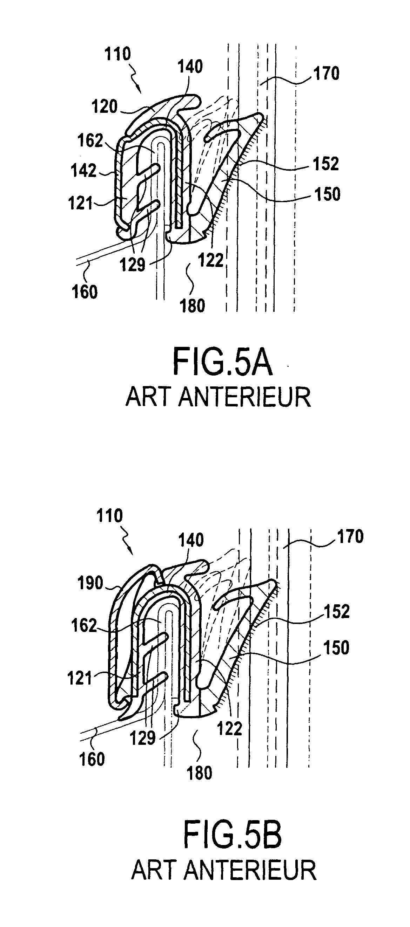

Sur une portière de véhicule comportant une vitre coulissante qui coulisse dans ou hors de la portière, il est nécessaire que l'interface entre la portière et la vitre soit étanche, afin d'éviter que de l'eau ne s'infiltre à l'intérieur de la portière et endommage les mécanismes à l'intérieur en cas de pluie. Cette interface prend la forme d'une garniture d'étanchéité. Cette garniture est extrudée, le matériau d'extrusion étant un polymère. Elle est de plus armée, c'est-à-dire qu'elle possède une armature en métal noyée dans le polymère. La présence de cette armature est nécessaire pour conférer suffisamment de rigidité à la garniture d'étanchéité pour que cette garniture soit apte à se maintenir sur le bord supérieur de la portière. Cette situation est illustrée sur les figures 5A et 5B, qui représentent deux exemples de réalisation d'une telle garniture d'étanchéité.

Dans la description qui suit, la direction longitudinale désigne la direction d'extrusion de la garniture d'étanchéité, et un plan transversal désigne un plan perpendiculaire à cette direction longitudinale.

La figure 5A montre une section transversale d'une garniture d'étanchéité 110 qui comprend un profilé extrudé 120 en forme de U inversé. Le profilé extrudé 120 comprend donc une première branche 121 et une seconde branche 122. L'extrémité de la seconde branche 122 de ce U est muni d'une lèvre extrudée 150, qui est flockée, c'est-à-dire qu'une partie de sa surface est revêtue d'un flockage 152. Un flockage est un élément qui contribue à améliorer le glissement sur une surface (ici une vitre) en venant frotter sur celle-ci, par exemple un ensemble de poils formant une brosse. Le profilé extrudé 120 et la lèvre extrudée 150 sont chacun réalisés en un polymère souple, qui peut éventuellement être identique. La direction d'extrusion est perpendiculaire au plan de la figure 5A, la section de la garniture d'étanchéité 110 étant sensiblement constante. Le profilé extrudé 120 est muni d'une armature 140 en métal qui est noyée dans sa masse, à l'exception d'une portion 142 qui recouvre une partie de la surface externe de la première branche 121 du profilé extrudé 120 (la surface interne de la première branche 121 et la surface interne de la seconde branche 122 étant les surfaces en regard, et les surfaces externes les surfaces opposées à ces surfaces internes). Cette portion 142 de l'armature 140 est donc visible, et joue le rôle d'enjoliveur qui améliore l'esthétique de la garniture d'étanchéité 110.

Les faces internes du profilé extrudé 120 comportent des excroissances 129. L'armature 140 est suffisamment rigide pour que lorsque le profilé extrudé 120 est enfourché sur le bord supérieur 162 de la portière 160, cette armature 140 pince ce bord supérieur 162 et le maintienne en place sur la portière 160. De plus, les excroissances 129 viennent ainsi en appui sur les surfaces du bord supérieur 162, et assurent l'étanchéité.

La lèvre extrudée 150 munie du flockage 152 vient en appui contre la vitre 170 qui coulisse dans et hors de la portière 160, lorsque la vitre 170 est sortie. Ainsi, l'étanchéité de l'espace 180 entre la portière 160 et la vitre 170 est assurée.

En figure 5B est illustré une garniture d'étanchéité 110 sensiblement identique à la garniture d'étanchéité de la figure 5A, à l'exception du fait que l'enjoliveur est constitué par un élément rapporté 190 qui vient se fixer sur le profilé extrudé 120 de telle sorte qu'il recouvre la face externe de la première branche 121 du U du profilé extrudé 120.

Les garnitures d'étanchéité actuelles sont ainsi d'une fabrication complexe, car cette fabrication nécessite la réalisation d'une garniture bi-matière composé de deux matériaux distincts (un enrobage en polymère et une armature en métal) avec des propriétés mécaniques différentes. La fabrication est donc coûteuse. De plus, pour les finitions d'extrémité (dans la direction longitudinale qui est la direction d'extrusion), des opérations supplémentaires sont en général nécessaires : par exemple des découpes de la garniture, un surmoulage, un rabattage des enjoliveurs en aluminium ou acier inoxydable. Ces opérations supplémentaires augmentent les coûts de fabrication.

De plus, lorsque l'on souhaite des enjoliveurs d'aspects extérieurs différents (par exemple sur des modèles différents de véhicule), il est souvent nécessaire de fabriquer autant de garnitures différentes, puisque l'armature joue le rôle d'enjoliveur (figure 5A).

La présente invention vise à remédier à ces inconvénients.

L'invention vise à proposer une garniture d'étanchéité de portière de véhicule dont le coût de fabrication soit diminué, et dont la modularité soit plus grande, c'est-à-dire qu'il puisse s'adapter à un plus grand nombre de véhicules.

Ce but est atteint grâce au fait que la garniture d'étanchéité comporte un profilé extrudé selon une direction longitudinale, et une coque rigide moulée qui coiffe ce profilé, de telle sorte que ce profilé est apte à être maintenu sur une portière de façon étanche par cette coque.

Grâce à ces dispositions, la fabrication de la garniture d'étanchéité est plus facile car il suffit d'assembler une partie plus souple (le profilé) avec une partie plus rigide (la coque). L'adjectif rigide qualifiant la coque signifie que la coque est plus rigide que le profilé. La coque recouvrant une partie du profilé, elle joue le rôle d'enjoliveur, et en conséquence seule cette coque est à changer pour obtenir des finitions extérieures différentes. Une multitude de finitions extérieures est donc possible avec un seul profilé. De plus, il n'est pas nécessaire de surmouler des embouts aux extrémités longitudinales de la garniture d'étanchéité pour parfaire sa finition. Il suffit de prévoir la forme des embouts désirée lors du moulage de la coque.

Avantageusement le profilé comporte au moins une lèvre extrudée s'étendant selon la direction longitudinale.

Par exemple, cette au moins une lèvre extrudée est flockée.

La présence de cette lèvre ou ces lèvres permet de réaliser l'étanchéité entre la portière et la vitre qui coulisse dans cette portière.

Avantageusement une extrémité longitudinale de la coque se prolonge par un élément selon une direction faisant un angle avec la direction longitudinale.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une coupe transversale d'une garniture d'étanchéité selon l'invention, montée sur une portière,
- la figure 2 est une vue en perspective d'une garniture d'étanchéité selon l'invention,
- la figure 3 est une coupe transversale d'un autre mode de réalisation d'une garniture d'étanchéité selon l'invention, montée sur une portière,
- la figure 4 est une vue en perspective d'une variante de réalisation d'une garniture d'étanchéité selon l'invention,
- la figure 5A est une coupe transversale d'une garniture d'étanchéité selon l'art antérieur,
- la figure 5B est une coupe transversale d'un autre mode de réalisation d'une garniture d'étanchéité selon l'art antérieur.

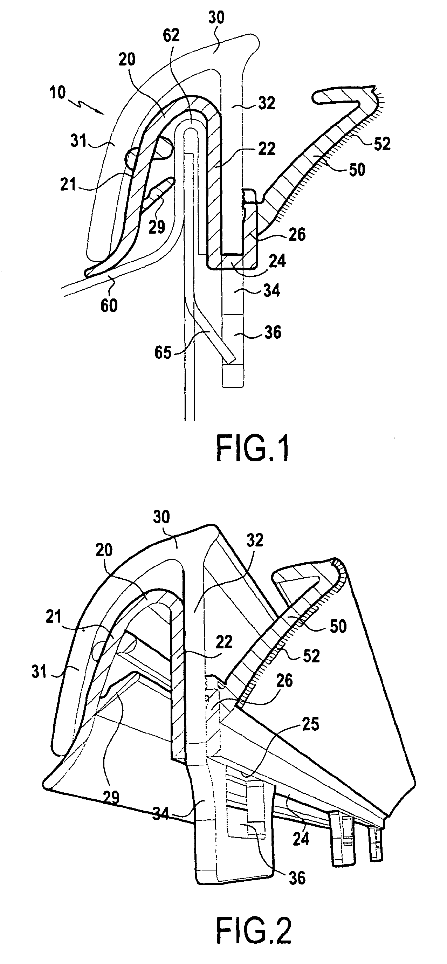

La figure 1 est une coupe transversale d'une garniture d'étanchéité 10 selon l'invention. La garniture d'étanchéité 10 s'étend donc selon une direction perpendiculaire au plan de la figure 1, qui est la direction d'extrusion et est appelée ci-après direction longitudinale. La longueur de la garniture d'étanchéité 10 désigne sa dimension selon la direction longitudinale. La garniture d'étanchéité 10 comprend un profilé extrudé 20 et une coque rigide 30 moulée. Le terme "rigide" est employé ici et dans la présente demande pour comparer le profilé 20 et la coque 30. Ainsi, la coque 30 moulée est plus rigide que le profilé extrudé 20. Une partie du profilé extrudé 20 a une section en forme de U inversé. Le profilé extrudé 20 comprend donc une première branche 21 et une seconde branche 22, sensiblement verticales. L'extrémité de la seconde branche 22 s'étend vers l'extérieur du U sensiblement perpendiculairement par une extension horizontale 24, qui courre sur une partie ou sur toute la longueur de la garniture d'étanchéité 10. Cette extension horizontale 24 se prolonge par un rebord 26 sensiblement parallèle et en vis-à-vis de la seconde branche 22, qui s'étend sur une partie ou sur toute la longueur de la garniture d'étanchéité 10. Le rebord 26 est typiquement moins haut que la seconde branche 22. Le rebord 26 est muni sur toute sa longueur d'une lèvre extrudée 50, qui s'étend en s'éloignant de la seconde branche 22. Cette lèvre extrudée 50 comporte un flockage 52 sur sa face opposée à sa face en vis-à-vis de la branche 22. Le flockage 52 de la lèvre extrudée 50 vient en appui contre une vitre qui coulisse dans et hors de la portière 60.

Le profilé extrudé 20 et la lèvre extrudée 50 sont chacun réalisés entièrement en un polymère souple. Le polymère formant le profilé extrudé 20 et le polymère formant la lèvre extrudée 50 peuvent être différent, ou être identiques. Dans le cas où ils sont différents, le polymère formant le profilé extrudé 20 est plus rigide que le polymère formant la lèvre extrudée 50, puisque ce dernier doit être suffisamment souple pour venir en appui sur la vitre lorsque celle-ci se déplace, comme expliqué ci-dessous. La fabrication du profilé est en outre facilitée si ce profilé est fabriqué par extrusion d'un matériau unique.

Une coque rigide moulée 30 en forme de U inversé vient coopérer avec le profilé extrudé 20 en le recouvrant. La coque rigide 30 possède ainsi une première branche 31 et une seconde branche 32. La coque rigide 30 est positionnée par rapport au profilé extrudé 20 de telle sorte que la première branche 31 recouvre la première branche 21 du profilé extrudé 20, et la seconde branche 32 recouvre la seconde branche 22 du profilé extrudé 20.

Ainsi, on voit sur la figure 1 que le profilé 20 comporte dans un plan transversal perpendiculaire à la direction longitudinale une partie en forme de U, et la coque 30 a dans ce plan transversal une forme de U dont la face concave recouvre la face convexe de la partie en forme de U du profilé 20, la face concave de la partie en forme de U du profilé 20 étant destinée à recevoir un bord 62 défini dans une portière 60.

La coque rigide 30 recouvre le profilé 20 sur toute sa longueur (c'est-à-dire dans la direction longitudinale).

La coque rigide 30 est moulée, ce qui rend sa fabrication plus facile tout en lui permettant de prendre des formes variées. Ainsi, si la garniture d'étanchéité 10 doit posséder une forme particulière ou des excroissances sur une partie de sa longueur, par exemple à ses extrémités, il est possible de prévoir ces formes au moment du moulage de la coque rigide 30.

De plus, la réalisation d'une garniture d'étanchéité 10 tel que décrit ci-dessous, avec une coque rigide 30 extérieure jouant le rôle d'enjoliveur et recouvrant un profilé 20 confère une grande adaptabilité à cette garniture d'étanchéité 10. En effet, seule la coque rigide 30 est à changer si l'on souhaite obtenir des finitions extérieures différentes. Ces finitions peuvent aller du noir mat ou brillant à un aspect chromé. Il est aussi possible de réaliser des finitions par dépose de film ou de peinture sur la coque rigide 30. Dans ce cas, on peut garder la même coque 30 pour plusieurs applications et ne changer que son revêtement extérieur. On peut également ajouter dans le moule servant à mouler la coque rigide 30 des inserts (par exemple métalliques), de telle sorte que ces inserts soient moulés en même temps que la coque 30 et deviennent partie intégrante de celle-ci. Ceci permet de donner localement à la coque 30 une forme apte à s'adapter à des éléments extérieurs adjacents.

L'ensemble formé par le profilé extrudé 20, et la coque rigide 30 est destiné à être enfourché sur le bord supérieur 62 (ou feuillure) d'une fenêtre d'une portière 60. Les dimensions de la coque rigide 30 sont telles que lorsque cet ensemble est enfourché sur le bord supérieur 62, la coque rigide 30 vient plaquer la face interne de la seconde branche 22 du profilé extrudé 20 contre une face du bord supérieur 62, et vient plaquer la face interne de la première branche 21 du profilé extrudé 20 contre la face opposée du bord supérieur 62 (la face interne de la première branche 21 et la face interne de la seconde branche 22 étant les faces en regard).

Selon l'exemple de la figure 1, la face interne de la première branche 21 du profilé extrudé 20 comprend une excroissance 29 en forme de lèvre qui est destinée à venir prendre appui près du bord supérieur 62 de la portière 60. L'excroissance 29 est réalisée dans un matériau qui lui permet de se déformer suffisamment lorsqu'elle vient en appui sur le bord supérieur 62 de la portière 60, et ainsi assurer l'étanchéité entre la garniture d'étanchéité 10 et la portière 60. Par exemple, l'excroissance 29 est réalisée dans le même matériau que celui de la lèvre extrudée 50 (si le profilé 20 en comporte), ce qui simplifie la fabrication de la garniture d'étanchéité 10.

Ainsi, la coque 30 est apte à maintenir la face concave de la partie en forme de U du profilé 20 sur le bord 62 de la portière 60 par pincement.

Ce pincement rend en outre la coque 30 solidaire du profilé extrudé 20.

Comme représenté sur les figures 1 et 2, la seconde branche 32 de la coque 30 est, en section transversale, sensiblement rectiligne, et la seconde branche 22 du profilé extrudé 20 est également, en section transversale, sensiblement rectiligne, de telle sorte que lorsque la seconde branche 32 de la coque 30 recouvre la seconde branche 22 du profilé extrudé 20, la seconde branche 32 est en contact avec la seconde branche 22 sur toute sa hauteur. L'épaisseur de la seconde branche 32 est choisie sensiblement égale à la distance entre la seconde branche 22 et le rebord 26 du profilé extrudé 20 de telle sorte que la seconde branche 32 de la coque rigide 30 est maintenue intimement entre la seconde branche 22 et le rebord 26 du profilé extrudé 20. Ainsi la solidarité entre la coque 30 et le profilé 20 est améliorée.

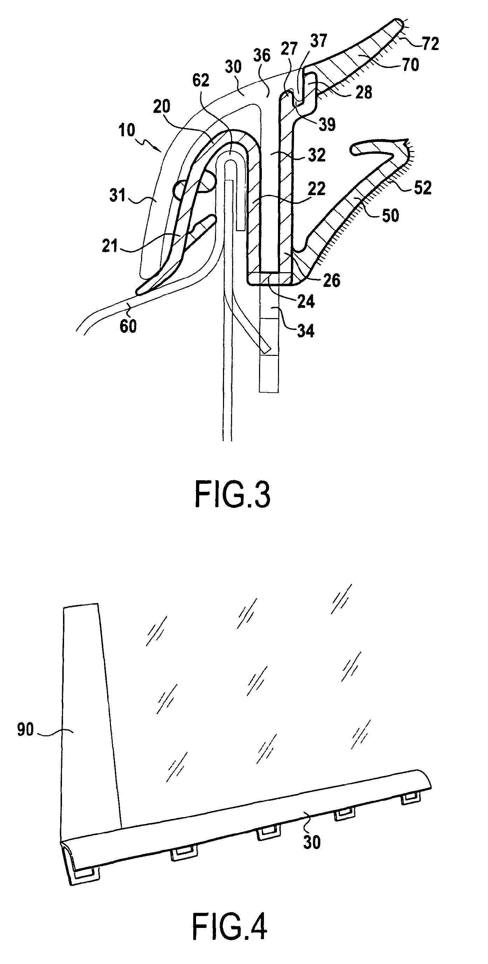

Selon un autre mode de réalisation, représenté sur la figure 3, le rebord 26 du profilé extrudé 20 se prolonge le long de la seconde branche 32 de la coque rigide 30 sensiblement jusqu'au lieu 36 où cette seconde branche 32 rejoint la première branche 31 de la coque rigide 30. Au niveau du lieu 36 de rencontre de la première branche 31 et de la seconde branche 32 de la coque rigide 30, le rebord 26 se dédouble en une première extrémité 27 qui longe la seconde branche 32, et une seconde extrémité 28 qui s'éloigne de la première extrémité 27 de façon à former avec celle-ci une fourche dans un plan transversal perpendiculaire à la direction longitudinale. La coque rigide 30 comporte au niveau du lieu 36 de rencontre de la première branche 31 et de la seconde branche 32 de la coque rigide 30 un ergot 37 qui s'insère dans l'espace 39 entre la première extrémité 27 et la seconde extrémité 28. Ainsi, l'ergot 37 maintient la première extrémité 27 plaquée contre la seconde branche 32 de la coque rigide 30. La totalité du rebord 26 est donc maintenu en contact avec la seconde branche 32 de la coque rigide 30 sur toute sa hauteur. La seconde extrémité 28, qui est en contact avec l'ergot 37, est munie sur toute sa longueur d'une lèvre extrudée 70, qui s'étend en s'éloignant de la seconde branche 22. Cette lèvre extrudée 70 comporte un flockage 72 sur sa face opposée à sa face en vis-à-vis de la branche 22. Le flockage 72 de la lèvre extrudée 70 vient en appui contre la vitre qui coulisse dans et hors de la portière 60. Le fait que deux lèvres extrudées (la lèvre 60 et la lèvre 70) au lieu d'une seule (la lèvre 60) viennent en contact avec la vitre qui coulisse dans et hors de la portière 60 permet d'améliorer encore l'étanchéité entre la portière 60 et cette vitre. Alternativement, l'une de ces deux lèvres extrudées ou les deux ne comporte pas de flockage.

Comme expliqué ci-dessus, la garniture d'étanchéité 10, qui comprend le profilé extrudé 20 et de la coque rigide 30 est maintenu sur le bord supérieur 62 d'une portière 60 grâce au pincement effectué par la coque 30.

La solidarisation entre la garniture d'étanchéité 10 et la portière 60 est ici complétée par un mécanisme d'accrochage. Ainsi, comme représenté sur les figures 1 à 3, la seconde branche 32 du U de la coque 30 se prolonge par des ergots 34 qui passent dans des trous 25 répartis le long d'une partie du profilé 20 selon la direction longitudinale de telle sorte que la coque 30 est solidaire du profilé 20, ces ergots 34 étant munis de trous 36 d'ergots aptes à recevoir des excroissances 65 de la portière 60.

Dans le plan transversal, les ergots 34 sont dans le prolongement rectiligne de la seconde branche 32. Pour permettre le passage de ces ergots 34, le prolongement 24 du profilé extrudé 20 est percé à ces mêmes intervalles de trous 25, visibles sur la figure 2. Les ergots 34 traversent donc le prolongement 24 par ces trous 25. Les excroissances 65 qui passent dans les trous 36 d'ergots sont obtenues par des "crevés", comme représenté sur la figure 1. De cette façon, la garniture d'étanchéité 10 est mieux fixée sur la portière 60.

D'autres modes de fixation de la garniture d'étanchéité 10 sur la portière 60 sont possibles.

Selon une variante, une extrémité longitudinale de la coque rigide 30 peut se prolonger par un élément 90 selon une direction faisant un angle avec la direction longitudinale, par exemple un angle droit, comme représenté sur la figure 4. Cet élément 90 est par exemple sensiblement rectiligne, et peut jouer le rôle d'un enjoliveur de montant d'une portière. Avantageusement, l'élément 90 est moulé en un seul bloc avec le reste de la coque 30. L'élément 90 est ainsi réalisé dans le même matériau que le reste de la coque 30, et le processus de fabrication est simplifié. Alternativement, l'élément 90 peut être surmoulé sur la coque rigide 30 par la suite. On peut donner à l'élément 90 un aspect extérieur différent de celui du reste de la coque 30.

## Revendications

1. Garniture d'étanchéité (10) de portière de véhicule destiné à être fixée sur une portière (60), comportant un profilé (20) extrudé selon une direction longitudinale, et une coque rigide (30) moulée qui coiffe ledit profilé (20), de telle sorte que ce profilé (20) est apte à être maintenu sur ladite portière (60) de façon étanche par ladite coque (30), **caractérisé en ce que** ledit profilé est entièrement en polymère souple.

2. Garniture (10) selon la revendication 1 **caractérisé en ce que** ledit profilé (20) comporte au moins une lèvre extrudée (50, 70) s'étendant selon ladite direction longitudinale.

3. Garniture (10) selon la revendication 2 **caractérisé en ce que** ladite au moins une lèvre extrudée (50, 70) est flockée.

4. Garniture (10) selon l'une quelconque des revendications 1 à 3, **caractérisé en ce que** ledit profilé (20) comporte dans un plan transversal perpendiculaire à ladite direction longitudinale une partie en forme de U, et ladite coque (30) a dans ledit plan transversal une forme de U dont la face concave recouvre la face convexe de ladite partie en forme de U du profilé (20), la face concave de ladite partie en forme de U du profilé (20) étant destinée à s'emboîter sur un bord (62) défini dans une portière (60).

5. Garniture (10) selon la revendication 4 **caractérisé en ce que** ladite coque (30) est apte à maintenir la face concave de ladite partie en forme de U du profilé (20) sur ledit bord (62) de la portière par pincement.

6. Garniture (10) selon la revendication 4 ou 5 **caractérisé en ce qu'**une branche (32) du U de la coque (30) se prolonge par des ergots (34) qui passent dans des trous (25) répartis le long d'une partie dudit profilé (20) selon ladite direction longitudinale de telle sorte que ladite coque (30) est solidaire dudit profilé (20), lesdits ergots (34) étant munis de trous (36) d'ergots aptes à recevoir des excroissances (65) de ladite portière (60).

7. Garniture (10) selon l'une quelconque des revendications 1 à 6, **caractérisé en ce qu'**une extrémité longitudinale de ladite coque (30) se prolonge par un élément (90) selon une direction faisant un angle avec ladite direction longitudinale.

8. Garniture (10) selon la revendication 7 **caractérisé en ce que** ledit élément (90) est moulé en un seul bloc avec le reste de ladite coque (30).

## Claims

1. A vehicle door sealing (10) for fastening on a door (60), comprising an extrusion (20) extruded in a longitudinal direction and a molded rigid shell (30) that covers said extrusion (20) in such a manner that the extrusion (20) is suitable for being held on said door (60) in sealed manner by said shell (30), **characterized in that** said extrusion is made entirely of flexible polymer.

2. A sealing (10) according to claim 1, **characterized in that** said extrusion (20) includes at least one extruded lip (50, 70) extending in said longitudinal direction.

3. A sealing (10) according to claim 2, **characterized in that** said at least one extruded lip (50, 70) is flocked.

4. A sealing (10) according to any one of claims 1 to 3, **characterized in that** said extrusion (20) includes a U-shaped portion in a transverse plane perpendicular to said longitudinal direction, and said shell (30) has a U-shape in said transverse plane with the concave face thereof covering the convex face of said U-shaped portion of the extrusion (20), the concave face of said U-shaped portion of the extrusion (20) being designed to engage on an edge (62) defined in a door (60).

5. A sealing (10) according to claim 4, **characterized in that** said shell (30) is suitable for holding the concave face of said U-shaped portion of the extrusion (20) on said edge (62) of the door by pinching.

6. A sealing (10) according to claim 4 or claim 5, **characterized in that** one branch (32) of the U-shape of the shell (30) is extended by lugs (34) that pass through holes (25) distributed along a portion of said extrusion (20) in said longitudinal direction in such a manner that said shell (30) is secured to said extrusion (20), said lugs (34) being provided with holes (36) suitable for receiving projections (65) from said door (60).

7. A sealing (10) according to any one of claims 1 to 6, **characterized in that** a longitudinal end of said shell (30) is extended by an element (90) in a direction that makes an angle with said longitudinal direction.

8. A sealing (10) according to claim 7, **characterized in that** said element (90) is molded as a single piece with the remainder of said shell (30).

## Patentansprüche

1. Dichtung (10) für eine Fahrzeugtür, die dazu bestimmt ist, auf einer Tür (60) befestigt zu werden, und die ein Profil (20), das entlang einer Längsrichtung extrudiert ist, und eine starre geformte Schale (30) aufweist, die auf dem Profil (20) derart sitzt, daß dieses Profil (20) geeignet ist, auf der Tür (60) von der Schale (30) dicht gehalten zu werden, **dadurch gekennzeichnet, daß** das Profil ganz aus biegsamem Polymer besteht.

2. Dichtung (10) nach Anspruch 1, **dadurch gekennzeichnet, daß** das Profil (20) mindestens eine extrudierte Lippe (50, 70) aufweist, die sich entlang der Längsrichtung erstreckt.

3. Dichtung (10) nach Anspruch 2, **dadurch gekennzeichnet, daß** die mindestens eine extrudierte Lippe (50, 70) beflockt ist.

4. Dichtung (10) nach einem der Ansprüche 1 bis 3, **dadurch gekennzeichnet, daß** das Profil (20) in einer Querebene senkrecht zu der Längsrichtung einen Teil in U-Form aufweist, und daß die Schale (30) in der Querebene (30) eine U-Form hat, deren konkave Seite die konvexe Seite des Teils in U-Form des Profils (20) abdeckt, wobei die konkave Seite des Teils im U-Form des Profils (20) dazu bestimmt ist, auf einem Rand (62), der in einer Tür (60) definiert ist, einzurasten.

5. Dichtung (10) nach Anspruch 4, **dadurch gekennzeichnet, daß** die Schale (30) geeignet ist, um die konkave Seite des Teils in U-Form des Profils (20) durch Klemmen auf dem Rand (62) der Tür zu halten.

6. Dichtung (10) nach Anspruch 4 oder 5, **dadurch gekennzeichnet, daß** sich ein Schenkel (32) des U der Schale (30) durch Dorne (34) verlängert, die durch Öffnungen (25), die entlang eines Teils des Profils (20) entlang der Längsrichtung derart verteilt sind, daß die Schale (30) fest mit dem Profil (20) verbunden ist, durchgehen, wobei die Dorne (34) mit Dornöffnungen (36) versehen sind, die geeignet sind, Ausstülpungen (65) der Tür (60) aufzunehmen.

7. Dichtung (10) nach einem der Ansprüche 1 bis 6, **dadurch gekennzeichnet, daß** sich ein Längsende der Schale (30) durch ein Element (90) entlang einer Richtung verlängert, die einen Winkel mit der Längsrichtung bildet.

8. Dichtung (10) nach Anspruch 7, **dadurch gekennzeichnet, daß** das Element (90) in einem einzigen Block mit dem Rest der Schale (30) abgeformt wird.
